## Europäisches Patentamt

## European Patent Office

## Office européen des brevets

(19)

(11) Numéro de publication: **0 127 134**
**B1**

(12) # FASCICULE DE BREVET EUROPÉEN

(45) Date de publication du fascicule du brevet:
**22.07.87**

(51) Int. Cl.⁴: **H 01 M 4/58,** H 01 M 6/16

(21) Numéro de dépôt: **84105920.7**

(22) Date de dépôt: **24.05.84**

(54) **Matière active positive pour générateur électrochimique de grande énergie spécifique.**

(30) Priorité: **30.05.83 FR 8308890**

(43) Date de publication de la demande:
**05.12.84 Bulletin 84/49**

(45) Mention de la délivrance du brevet:
**22.07.87 Bulletin 87/30**

(84) Etats contractants désignés:
**AT BE CH DE FR GB IT LI LU NL SE**

(73) Titulaire: **Société Anonyme dite SAFT, 156, avenue de Metz, F-93230 Romainville (FR)**

(72) Inventeur: **Broussely, Michel, 53, avenue de Poitiers, F-86240 Liguge (FR)**
Inventeur: **Boivin, Jean- Claude, 4, rue Castermant, F-59150 Wattrelos (FR)**

(74) Mandataire: **Weinmiller, Jürgen, Lennéstrasse 9 Postfach 24, D-8133 Feldafing (DE)**

(56) Documents cité:
**EP-A-0 001 598**

**CHEMICAL ABSTRACTS, vol. 85, no. 12, 20 septembre 1976, page 562, no. 86094y, Columbus, Ohio, US; T. MITSUYU et al.: "Piezoelectric thin films of rf-sputtered bismuth lead oxide (Bi12PbO19) JOURNAL OF POWER SOURCES, vol. 9, no. 2, mars 1983, pages 167-183, Elsevier Sequoia, Amsterdam, NL; A. LE MEHAUTE: "Structure et réversibilité électrochimique des matériaux à intercalation d'alcalin susceptibles d'être reduits en milieux non aqueux"
CHEMICAL ABSTRACTS, vol. 92, no. 4, janvier 1980, page 581, no. 30899s, Columbus, Ohio, US; M. BROUSSELY et al.: "Lead oxides-lithium cells"**

## Description

La présente invention concerne un générateur électrochimique selon le préambule de la revendication 1.

On a proposé dans le document FR-A-2 406 312 d'utiliser comme matière active positive un dérivé de l'oxyde de plomb divalent PbO, ce dérivé étant une combinaison dudit oxyde avec un oxyde choisi dans le groupe des oxydes de bismuth $Bi_2O_3$ d'antimoine $Sb_2O_3$ et d'étain $SnO_2$.

Un bismuthate de plomb de formule $Pb_2Bi_2O_5$ donne, entre autres, d'excellents résultats. Une capacité spécifique cathodique de 2,65 $Ah/cm^3$ à été obtenue grâce à ce matériau.

Les travaux de J.C. BOIVIN (Acad Sc Paris 278,865 - 1974) ont mis en évidence l'existence de nombreuses phases cristallines dans le système binaire $Bi_2O_3$-PbO auquel appartient la composition $Bi_2Pd_2O_5$ précitée

La présente invention a pour but de proposer un générateur électrochimique dont la matière active postive a une capacité spécifique supérieure à celle du bismuthate de plomb, $Bi_2Pb_2O_5$.

Ce but est atteint selon l'invention par le générateur tel qu' il est défini dans la revendication I. La composition selon la formule $Bi_{12}PbO_{19}$, qui est connue (voir p. ex. Journal of Power Sources, 9(1983), pages 167 à 183), correspond à deux phases du diagramme binaire $Bi_2O_3$-PbO ; elle peut avoir la forme soit d'une phase cristalline définie, soit d'une solution solide des deux oxydes, en fonction de la température de préparation. Cette différence entre les deux produits obtenus, de structure cristalline voisine, n'entraîne pas de différence sensible sur les propriétés électrochimiques.

A titre d'exemple, on obtient la phase cristalline définie par chauffage du mélange des deux oxydes PbO et $Bi_2O_3$ dans le rapport molaire de 1 à 6, à une température de 650°C.

Une telle matière active a une masse spécifique de 9,3 $g/cm^3$ et une capacité faradique spécifique de 3,13 $Ah/cm^3$.

En ce qui concerne des exemples préférés de mise en oeuvre de l'invention, référence est faite aux revendications secondaires.

L'invention sera mieux comprise grâce aux exemples décrits ci-après à titre illustratif et non limitatif, illustré par le dessin annexé dans lequel:

- la figure 1 est une coupe schématique d'une pile selon l'invention,
- les figures 2 à 4 représentent des courbes de décharge de piles de la technique antérieure, et selon l'invention.

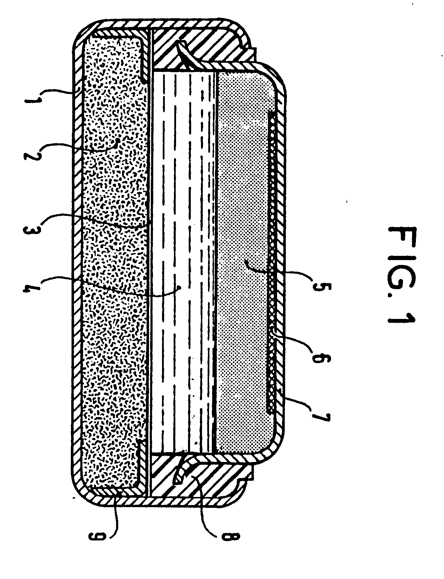

On a préparé plusieurs piles bouton du type de celle apparaissant dans la figure 1, piles de diamètre 11,4 mm et de hauteur 2 mm.

Les constituants actifs sont enfermés dans un boîtier constitué d'une part d'une coupelle métallique 1 qui contient l'électrode positive 2 et un anneau de renfort 9, et d'autre part d'une coupelle métallique 7 qui contient la matière active négative 5 en lithium incrustée sur une grille de nickel 6 soudée à la coupelle 7.

Les coupelles 1 et 7 sont emboîtées l'une dans l'autre, et isolées électriquement l'une de l'autre par un joint isolant 8. La matière active négative 5 et l'électrode positive 2 sont séparées par une barrière 3 consistant en un film microporeux de polypropylène, et une épaisseur 4 de fibres de verre qui contient l'électrolyte.

__1er exemple: (art antérieur)__

On a utilisé 16 mg de lithium et 50 $\mu$ l d'électrolyte constitué d'une solution 2M de perchlorate de lithium dans un dioxolanne.

L'électrode positive 2 est constituée de 2 mg de bismuthate de plomb $Bi_2 Pb_2O_5$ incrusté dans un support de graphite pur comprimé sous 2 $Tonnes/cm^2$. La matière active positive a été introduite en faible quantité de façon à ce que l'on ait un excès des autres ccmposants de la pile.

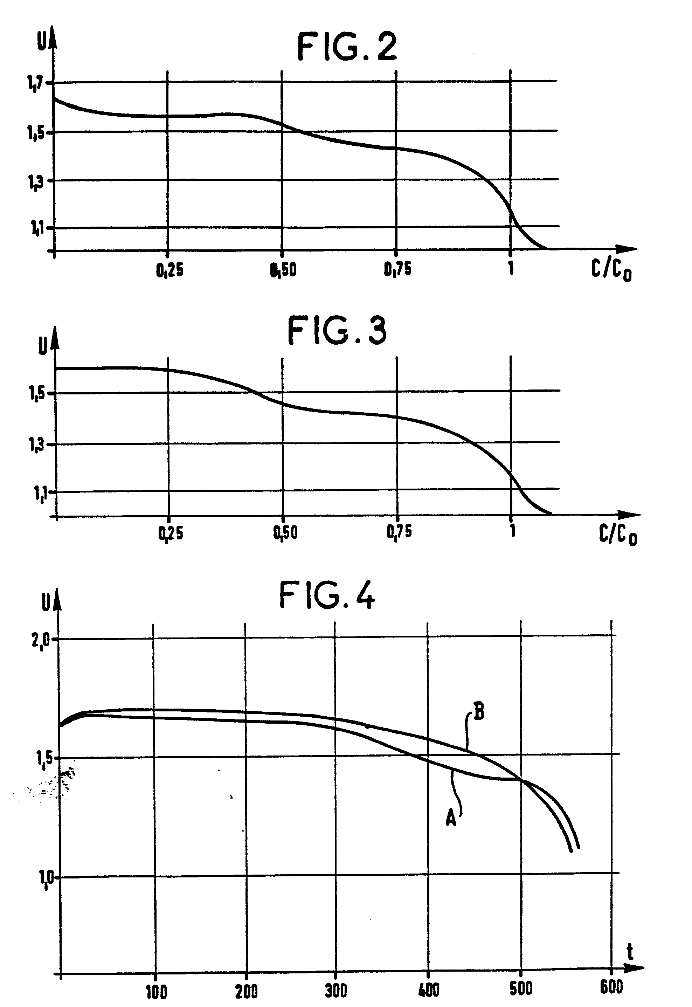

On voit sur la figure 2 le profil de décharge de la pile, c'est-à-dire sa tension U en fonction de la profondeur de décharge ; la décharge a été effectuée sur la résistance de 30 K $\Omega$. La tension U est mesurée en volt, la profondeur de décharge est exprimée par le rapport C/Co, où Co est la capacité calculé sur la base de 10 Faradays/mole de $Bi_2 Pb_2O_5$ et C la capacité déchargée.

On peut constater que l'on obtient effectivement l0 Faradays/mole, c'est-à-dire 290 mAh par gramme de matière active positive, ou, compte tenu d'une masse volumique de 9,1 $g/cm^3$, 2,64 $Ah/cm^3$.

__2ème exemple:__

On a remplacé dans la pile du premier exemple le $Bi_2Pb_2O_5$ par la matière active selon l'invention $Bi_{12}PbO_{19}$. Le même poids de matière active positive a été utilisé.

On voit sur la figure 3 une courbe du même type que celle de la figure 2. La capacité faradique Co est calculée sur la base de 38 Faradays/mole. On observe que cette capacité est réellement obtenue, c'est-à-dire 337 mAh par gramme de matière active, ou, compte tenu d'une masse spécifique de 9,3 $g/cm^3$, 3,13 $Ah/cm^3$.

__3ème exemple:__

Des piles boutons de mêmes dimensions ont été réalisées avec les deux matières actives positives précitées, mais contenant des quantités de ces matières plus importantes, en rapport avec la quantité de lithium toujours égale à 16 mg, soit 61 mAh.

Dans le volume imparti à l'électrode positive, on comprime la matière active positive sous 2 $T/cm^2$ de façon à obtenir une électrode de 0,5 mm d'épaisseur.

Dans ces conditions, on a pu introduire d'une part 270 mg de $Bi_2Pb_2O_5$, soit 78 mAh (pile A) et d'autre part 270 mg de $Bi_{12}PbO_{19}$, soit 90 mAh (pile B).

On voit sur la figure 4 les tensions U (volt) de décharge des piles A et B sur une résistance de 15 K $\Omega$ en fonction du temps t (en heures); les courbes A et B se rapportent respectivement aux piles A et B.

Bien que la capacité faradique totale de la pile ne soit pas aaugmentée du fait de la quantité limitée de lithium, la matière active positive selon l'invention présente l'avantage d'améliorer le profil de décharge. Cette amélioration se manifeste par une tension plus élevée et plus constante en fin de décharge.

Cette propriété est fort intéressante pour les utilisateurs, par exemple dans les piles pour montres, ou toute autre application nécessitant une tension aussi constante que possible.

Lorsque les tensions minima d'utilisation sont élevées, par exemple 1,5 V dans ce cas, le gain est évident.

Bien entendu l'invention n'est pas limitée au seul mode de réalisation qui vient d'être décrit, notamment quant au choix des conducteurs électroniques et des électrolytes. L'invention s'applique en particulier aux piles à électrolyte solide.

## Revendications

1. Générateur électrochimique de grande énergie spécifique comprenant une électrode négative (5) à base d'un métal alcalin ou alcalino-terreux, un électrolyte non aqueux, et une électrode positive (2), caractérisé par le fait que la matière active de l'électrode positive répond à la formule $Bi_{12}PbO_{19}$.

2. Générateur électrochimique selon la revendication 1, caractérisé par le fait que le solvant de l'électrolyte est choisi dans le groupe constitué par le dioxolanne, le tétrahydrofuranne, le diméthoxyéthane, le diglyme, le triglyme, le tétraglyme, le sulfite de diméthyle, le carbonate de propylène, le carbonate d'éthylène et leurs mélanges.

3. Générateur électrochimique selon l'une des revendications 1 et 2, caractérisé par le fait que le soluté de l'électrolyte est un sel de lithium choisi dans le groupe constitué par le perchlorate, le tétrafluoroborate, le trifluorométhanesulfonate, l'hexafluoroarséniate.

4. Générateur électrochimique selon la revendication 1, caractérisé par le fait que l'éleotrolyte est une solution de perchlorate de lithium à 2 moles/litre dans le dioxolanne.

## Patentansprüche

1. Elektrochemischer Generator großer spezifischer Energie mit einer negativen Elektrode (5) auf der Basis eines Alkalimetalls oder eines Erdalkalimetalls, mit einem nichtwässrigen Elektrolyten und einer positiven Elektrode (2), dadurch gekennzeichnet, daß das aktive Material der positiven Elektrode der Formel $Bi_{12}PbO_{19}$ entspricht.

2. Elektrochemischer Generator nach Anspruch 1, dadurch gekennzeichnet, daß das Lösungsmittel des Elektrolyten aus der Gruppe ausgewählt wird, die aus Dioxolan, Tetrahydrofuran, Dimethyloxyethan, Diglym, Triglym, Tetraglym, Dimethylsulfit, Propylencarbonat, Äthylencarbonat und ihren Mischungen besteht.

3. Elektrochemischer Generator nach einem der Ansprüche 1 und 2, dadurch gekennzeichnet, daß der gelöste Stoff des Elektrolyten ein Lithiumsalz ist, das aus der Gruppe ausgewählt wird, die aus Perchlorat, Tetrafluorborat, Trifluormethansulfonat und Hexafluorarseniat besteht.

4. Elektrochemischer Generator nach Anspruch 1, dadurch gekennzeichnet, daß der Elektrolyt eine Lösung von Lithiumperchlorat mit 2 Mol/Liter in Dioxolan ist.

## Claims

1. An electrochemical generator of high specific energy comprising a negative electrode (5) on the basis of an alkali or alkaline earth metal, a non-aqueous electrolyte and a positive electrode (2), characterized in that the active material of the positive electrode has the formula $Bi_{12}PbO_{19}$.

2. An electrochemical generator according to claim 1, characterized in that the solvent of the electrolyte is chosen from the group constituted by dioxolan, tetrahydrofuran, dimethoxyethan, diglyme, triglyme, tetraglyme, dimethyl sulfite, propylene carbonate, ethylene carbonate and mixtures thereof.

3. An electrochemical generator according to one of claims 1 and 2, characterized in that the solute of the electrolyte is a lithium salt chosen from the group constituted by perchlorate, tetrafluoroborate, trifluoromethanesulfonate and hexafluoroarsenate.

4, An electrochemical generator according to claim 1, characterized in that said electrolyte is a solution of 2 moles/ liter of lithium perchlorate in dioxolan.

# FIG. 1

# FIG.2

# FIG.3

# FIG.4